# EUROPÄISCHE PATENTSCHRIFT

(11) **EP 4 167 004 B1**
(45) Veröffentlichungstag und Bekanntmachung des Hinweises auf die Patenterteilung: **18.11.2026**
(21) Anmeldenummer: 22187121.3
(22) Anmeldetag: 27.07.2022
(51) Int. Cl.: G02B 6/38, H01R 13/436, H01R 13/58

(54) **STECKVERBINDER ZUR OPTISCHEN UND ELEKTRISCHEN SIGNALÜBERTRAGUNG**
CONNECTOR FOR OPTICAL AND ELECTRICAL SIGNAL TRANSMISSION
CONNECTEUR ENFICHABLE POUR LA TRANSMISSION DE SIGNAUX OPTIQUES ET ÉLECTRIQUES

(30) Priorität: 18.10.2021 DE 102021126914
(43) Veröffentlichungstag der Anmeldung: 19.04.2023
(73) Patentinhaber: MD ELEKTRONIK GmbH, 84478 Waldkraiburg (DE)
(72) Erfinder: Preis, Roland, 84544 Aschau am Inn (DE); Bajic, Marijela, 84478 Waldkraiburg (DE); Kaaserer, Markus, 84478 Waldkraiburg (DE); Stömmer, Christian, 85435 Erding (DE)

(56) Entgegenhaltungen:
- DE-A1- 19 526 267
- US-A- 5 242 315
- US-A1- 2012 076 501
- US-A1- 2016 282 564
- ANONYMOUS: "LUCENTI VINCI CONTROLLER USER MANUAL", 1 November 2018 (2018-11-01), pages 1 - 64, XP093276208, Retrieved from the Internet <URL:https://cdn.prod.website-files.com/5e2ee5235b8bed938ebea3d8/5e55379fbb2bbd5afbb9faac_Vinci-Manual-EN_101.pdf>

## Beschreibung

### Technisches Gebiet

Die Erfindung betrifft einen Steckverbinder und eine Steckverbindung zur optischen und elektrischen Signalübertragung, sowie ein Verfahren zum Herstellen einer solchen Steckverbindung.

### Stand der Technik

Die Ausstattung von Kraftfahrzeugen, vor allem der mittleren und oberen Klasse, mit sog. Fahrerassistenzsystemen (ADAS) nimmt seit Jahren stark zu. Der internationale Standard SAE J3016 klassifiziert in 6 Stufen den Grad der Automatisierung in Kraftfahrzeugen, wobei Level 0 keine automatisierten Fahrfunktionen (außer ABS und ESP) und Level 5 vollautomatisiertes Fahren definiert. Fahrzeuge, deren Ausstattung Level 3 entspricht, können heute bereits teilautonome Fahrfunktionen übernehmen und werden heute schon von einigen Fahrzeugherstellern zum Kauf angeboten. Um diese Funktionen wetter- und tageszeitunabhängig unter realen Gegebenheiten darstellen zu können, benötigt ein entsprechendes Fahrzeug mehrere unterschiedliche Sensoren. Diese sollen während der Fahrt eine Abtastung der Umgebung ermöglichen, die Fahrbahnbeschaffenheit und auch bewegte Objekte erfassen können. Aus diesen Anforderungen hat es sich gezeigt, dass einzelne Sensoren (z.B. eine Frontkamera) eine hohe Bild- und Farbauflösung bei gleichzeitig niedriger Latenzzeit und hoher Datenintegrität aufweisen müssen. Das führt zu sehr hohen Datenraten (mehrere Gb/s (Gigabit pro Sekunde) bis mehr als 50Gb/s für Level 4 oder 5 Fahrzeuge), zumal die Signalauswertung (z. B. Bildsignale, Videostream) unkomprimiert an den verarbeitenden Prozessor in der ECU (Electronic Control Unit, Steuergerät) übertragen werden muss. Wiederum befindet sich diese ECU auch an einem anderen Verbauort als der Sensor. Je nach Gegebenheit können hier Leitungslängen von mehreren Metern von Sensor zur ECU notwendig sein. Entsprechend werden hier Datenleitungen benötigt, die diese hohen Anforderungen leisten können. Die Topologie der ADAS Komponenten gestaltet sich in der Regel in der Form, dass sich die Sensoren (Kameras, Radar, Lidar etc.) an der Außenseite der Karosserie, oberseitig hinter der Windschutzscheibe oder beispielsweise auch in den Außenspiegeln befinden. Die damit verbundenen signalverarbeitenden Steuergeräte (ECU 's) sind gut geschützt gegen Umwelteinflüsse und Beschädigungen verdeckt im Fahrzeuginnenraum verbaut. Um den gesamten Verkabelungsaufwand möglichst gering zu halten, einen möglichst geringen Bauraum zu belegen, sowie den harten Anforderungen an Temperatur- und mechanischer Belastung zu entsprechen, ist es zweckmäßig, die Leitungen für die Datenübertragung sowie Spannungsversorgung und evtl. Steuerleitungen für den Sensor in einem Mehrfach-Kabel bzw. Mehrfach-Steckverbinder zu kombinieren. Insbesondere für Anwendungen mit hochauflösenden Sensoren (z.B. Kamera, Radar, Lidar), welche mit einer asymmetrischen Datenübertragungsrate auskommen.

HSD-Steckverbindungssysteme werden in der heutigen Automobilindustrie vielfach eingesetzt. HSD-Stecksysteme können mit bis zu vier elektrischen Leitern belegt werden und einem elektrisch leitenden Außenschirm. Passend zu diesen Steckverbindern gibt es Mantelleitungen, welche vier Kupferlitzen-Adern als sog . Sternvierer verdrillt angeordnet haben. So ergeben sich zwei nutzbare Adernpaare (Twisted Pair) zur Datenübertragung. Sehr häufig wird je ein Adernpaar für je eine Datenrichtung benutzt. Alternativ kann z.B. auch ein Paar für eine Stromversorgung (Plus/Minus) oder gemischt als Steuerleitungen verwendet werden. Es ist jedoch nicht möglich, zwei Datenleitungspaare plus eine Spannungsversorgung mit einer Mantelleitung zu konfektionieren. Die für HSD-Leitungssätze typische Übertragungsbandbreite reicht nicht aus, um die oben beschriebenen Datenraten zu übertragen.

Konstruktionsbedingt ergibt sich für handelsübliche HSD-Steckverbinder mit passendem Kabel eine begrenzte Übertragungsbandbreite, welche die Datenrate pro Adernpaar (Twisted Pair) auf ca. 3Gb/s limitiert. Datenleitungen mit Datenraten größer mehreren hundert Mbps erfordern ein konstantes Impedanzverhalten über die Leitungslänge, um Signalbeeinträchtigungen (z.B. Signalreflexionen, Übersprechen) zu vermeiden. Aufgrund der mechanischen Robustheit und konstruktiven Gegebenheiten ist das aber oftmals nur begrenzt einhaltbar. Alterungseffekte sowie Beeinträchtigungen durch die Verlegung (z.B. kleine Biegeradien, Druckstellen durch Kabelbinder) erhöhen die Impedanzabweichungen der Leitungen. Je höher die angewandte Datenrate bzw. Signalfrequenz, desto stärker wirken sich diese nachteiligen Effekte auf das Gesamtsystem aus.

Technische Lösungen mit mehreren Kupferleitungspaaren oder mehreren Koaxialkabeln ermöglichen es ebenfalls, eine höhere Datenrate zu übertragen. Jedoch ist es hier notwendig, ein sog. Multilane zu verwenden (Aufteilung der hohen Datenrate auf mehrere Leitungen mit niedrigerer Datenrate, z.B. wird eine 12Gb/s Datenverbindung auf 4 x 3Gb/s Datenleitungen aufgeteilt). Der Aufwand ist jedoch sehr hoch. Die erhöhte Anzahl an Leitungen, die größeren notwendigen Steckverbinder erhöhen nicht nur die Materialkosten und Gewicht sondern erhöhen auch deutlich den benötigten Bauraum. Ebenso entsteht ein erhöhter Aufwand im Bereich der sog. PHY's (Physical Layer It. OSI-Schichtenmodel, Treiber- und Empfängerschaltungen für die Datenleitungen) sowie der EMV-konformen Filterung und ESD-Schutz. Die Verwendung von verschiedenen Signal-Modulationstechniken führt auch nur bedingt zu einer wirtschaftlich sinnvollen Lösung. Entweder verringert sich der Signal-Rausch-Abstand (SNR, z.B. bei PAM) der Übertragungseinheit und/oder es erhöht sich stark die elektrische Verlustleistung in den Sende- und Empfangsbausteinen. Erhöhte Verzögerungszeiten (Delay, z.B. bei QAM) in der Signalübertragung wegen der Modulation- und Demodulation sind aufgrund der zeitkritischen Sicherheitsanforderungen nicht tolerierbar. Zusätzlich steigen durch den deutlichen Mehraufwand in den elektronischen Schaltungen die elektrische Verlustleistung und die Stückkosten.

Bei vielen Anwendungen ist es nicht notwendig, den Aufwand für eine Übertragung von hohen Datenraten in beide Richtungen (z.B. von Sensor zur ECU und zurück) vorzuhalten. Wenn überhaupt benötigt, dann reicht als Rückkanal (z.B. zum Sensor) oft schon eine Datenleitung mit geringer Datenrate, z.B. 10Mb/s oder weniger. Das lässt sich dann auch ohne großen Aufwand mit herkömmlichen elektrischen Datenleitungen umsetzen.

Aufgrund der physikalischen Vorteile einer optischen Datenübertragung ist es möglich, je nach Art der optischen Faser, Datenraten, teilweise auch unmoduliert (NRZ) mit mehr als 25Gb/s, auch über Leitungslängen von mehreren 100m zu übertragen. Hierbei bietet die optische Datenübertragung noch die herausragenden Vorteile hinsichtlich EMV (elektromagnetische Störungs-Ein- und Abstrahlung) sowie einer galvanischen Trennung zwischen Sensor und ECU. Gegenüber vergleichbaren kupferleitungsbasierten Lösungen können optisch-elektrische PHY's mit deutlich geringerer elektrischer Verlustleistung konstruiert werden. Eine durch den Betrieb entstehende elektrische Verlustleistung ist in den ECU 's und in den Sensoren sehr problematisch, da bereits die definierte Umgebungstemperatur im automotiven Bereich sehr hoch ist (85°C/105°C) und ein Abführen der Wärme der Komponenten am Verbauort oft sehr schwierig oder auch unmöglich ist.

Steckverbinder für optische Fasern gibt es für unterschiedliche Anwendungen und für unterschiedliche Faser-Arten. Hierbei unterscheiden sich die Anforderungen und damit die konstruktiven Merkmale an einen optischen Steckverbinder wesentlich in der Art der verwendeten optischen Faser. Die Übertragungseigenschaften einer optischen Faser für Datenübertragung wird neben den Materialeigenschaften auch durch den Durchmesser des Faserkerns bestimmt. Je kleiner der Kerndurchmesser, desto weniger Moden werden durch die Faser übertragen. Je größer der Kerndurchmesser, desto mehr Moden können sich in der Faser ausbreiten. Aufgrund des längeren optischen Weges in der Faser, haben Moden mit höherer Ordnung eine längere Laufzeit. Das äußerst sich dann am Empfänger dadurch, dass das Datensignal "verschliffen" wird. Die Amplitude wird kleiner, aber in der Zeit länger. Das beim Empfänger tolerierbare Zeitraster zum Dekodieren der übertragenen Bits wird hiermit verletzt. Es kommt zu Übertragungsfehlern.

Handelsübliche Kerndurchmesser sind z.B. 9µm (sog. Singlemode-Faser (SM-Faser)), typischerweise für lange Distanzen (einige 100m bis viele km) verwendet, 50µm (sog. Multimode-Faser (MM-Faser)), für kurze Distanzen bis einige 100m, z.B. OM3-Glasfaser, und 980µm (Step-Index Faser), für niedrige Datenraten und kurze Distanzen von einigen Metern, als Kunststoff-Faser (POF) für den sog. MOST-Bus^{®} im Automobilbau verwendet. Je nach Material und Konstruktion haben optische Fasern eine bauartbestimmte Signaldämpfung, die sich proportional mit der verwendeten Länge ergibt und auch abhängig von der verwendeten Wellenlänge ist. Für Datenübertragungsstrecken sind bestimmte maximale Pegelverluste (Signaldämpfung, Insertion Loss IL) tolerierbar. Erreicht der Pegelverlust eine systemdefinierte maximale Grenze, kommt es zu Übertragungsfehlern oder zum Übertragungsabbruch. Deshalb ist man bemüht, Pegelverluste möglichst niedrig zu halten.

Bei Steckverbindern für optische Fasern ergeben sich durch mechanische Abweichungen (Toleranzen) entsprechende Signalverluste. Zum Beispiel entstehen durch axiale Abweichungen der Faserkerne oder einer Lücke zwischen den Faserenden Signaldämpfungen, durch Winkelabweichungen (Tilt) kommt es zusätzlich auch zu höherer Modenausbreitung. Betrachtet man hierbei eine SM-Faser mit einem Kerndurchmesser von 9µm, so sollten z.B. axiale Abweichungen von weniger als 2µm erreicht werden. Diese enorm hohe Präzision kann nur durch eine sehr kostenintensive Technologie (Verwendung von hochpräzisen Ferrulen, kostenintensive Verarbeitung) erreicht werden. Die Steckverbindung muss zudem frei von Staubpartikeln sein, da diese Partikel eine optische Übertragung ebenfalls abschwächen oder blockieren können. Für den kostensensitiven und hochvolumigen Automobilmarkt mit seinen rauen Einsatzbedingungen ist diese Technik also nicht gut geeignet.

Kunststoff-Fasern mit 980µm Kerndurchmesser bieten einfache Verarbeitung und eine sehr gute Robustheit gegenüber mechanischen Abweichungen im Steckbereich, sind aber aufgrund der sehr hohen Signaldämpfung (ca. 160dB/km) und der sehr geringen Übertragungsbandbreite (ca. 40MHz • km) für höhere Datenraten z.B. >1Gb/s nicht geeignet.

Multimode-Fasern mit einem typischen Kerndurchmesser von 50µm bieten hier hinsichtlich der Bandbreite und der Verarbeitung bessere Voraussetzungen. Jedoch kann auch hiermit bei einem sog. Butt-Coupling (die beiden Faserenden stoßen stirnseitig im Steckverbinder aneinander), das bei elektrischen Steckverbindern übliche Toleranzfeld nicht angewendet werden. Die bei Zugbeanspruchung zwischen den Steckverbindern entstehende Lücke wäre zu groß. Zudem dürften sich auch nahezu keine Staupartikel in dem optischen Steckbereich befinden. Der Eintrag von Staubpartikeln durch Abstecken der Steckverbindung bei Erstmontage, im Feld sowie durch Abrieb der Steckerkomponenten sind jedoch in der Praxis nicht vermeidbar.

Die Druckschrift EP 1 199 587 B1 beschreibt optische Stecker und insbesondere optische Stecker, die elektrische Anschlüsse enthalten. Dabei treffen sich ein vorderer und ein hinterer Teil einer Steckverbindung in einer optischen Ebene, in der dann Hülsen der optischen Stecker zusammentreffen. Die oben genannten Probleme können auftreten.

Die Druckschrift DE 195 26 267 A1 betrifft einen, mit einer Anschlußleitung verbindbaren, elektrischen Stecker, der einen die elektrischen Kontakte aufnehmenden Einsatzkörper besitzt, und deren Anschlußadern jeweils mit den Anschlußköpfen der Steckerstifte und ggf. einem Schutzkontakt verbunden sind, und neben den elektrischen Leitungsadern noch wenigstens eine optische Leitungsader in die Leitung eingebettet und in den Stecker eingeführt ist. Ein derartiger Stecker soll den Zweck erfüllen, ein externes Gerät, beispielsweise eine Waschmaschine, an das Stromnetz (Hausnetz) und gleichzeitig an einen elektrischen Steuerbus anzuschließen, wobei zur Vermeidung von Störeinstreuungen von der Netzspannung die Signalübertragung von der Steckdose bis zum externen Gerät auf optischem Wege erfolgt.

Die Druckschrift US 2016/0282564 A1 betrifft einen Hybrid-Steckverbinder mit einem isolierenden Gehäuse, das einen Hohlraum zur Aufnahme einer optischen Faseranordnung und eine Vielzahl von Durchgängen zur Aufnahme einer Vielzahl von Anschlüssen darin definiert. Eine gedruckte Leiterplatte ist hinter den Anschlüssen angeordnet und mit den Anschlüssen verbunden. Ein elektrisches Kabel ist an einem hinteren Teil der Leiterplatte angebracht. Die gesamte optische Faseranordnung wird in dem Gehäuse aufgenommen und ist in einer Richtung von vorne nach hinten etwas hin- und herbewegbar, um eine Pufferung für eine nachgiebige Kopplung mit einer anderen optischen Faseranordnung zu ermöglichen, die in dem komplementären Buchsenverbinder eingebaut ist, wenn der Steckverbinder in den komplementären Buchsenverbinder eingeführt wird.

Die Druckschrift US 2012/0076501A1 betrifft eine Vorrichtung zur Verbesserung der Bandbreite eines Transceiver-Systems, z. B. eines USB-Micro-B-Anschlusses. Die Vorrichtung umfasst ein erstes Paar von Linseneinheiten, wobei jede Linseneinheit des Paares auf jeder Seite einer Eingabe-Ausgabe (E/A)-Busschnittstelle positioniert ist, wobei das Paar von Linseneinheiten optische Signale sendet bzw. empfängt; ein erstes Gehäuse, um das erste Paar von Linseneinheiten abzuschirmen und um die E/A-Busschnittstelle und das erste Paar von Linseneinheiten physisch mit einer Aufnahme zu koppeln; und eine Passfeder, um das erste Gehäuse zu greifen und das erste Gehäuse mit der Aufnahme zu verriegeln.

Die Druckschrift US 5,242,315 A1 betrifft eine Konfiguration eines Gehäuses, welche die Montage eines hybriden elektrisch optischen Steckverbinders erleichtert, um die Herstellungskosten zu minimieren und den Stecker dadurch besonders gut für die Verwendung mit einem Einweg-Peripheriegerät geeignet zu machen. Das Gehäuse besteht aus zwei miteinander verrasteten Gehäusehälften, die die elektrischen und optischen Anschlüsse in einer korrekt ausgerichteten Orientierung halten und ihre Verschiebung in Längsrichtung sowie in radialer Richtung verhindern.

Schließlich soll eine kostenintensive Neuentwicklung eines Steckverbinders vermieden werden. Insbesondere sollen die elektrischen Kontakte und die mechanischen Abmaße von bestehenden (HSD-) Steckverbindungen genutzt werden.

### Beschreibung der Erfindung

Es ist daher eine Aufgabe der vorliegenden Erfindung einen Steckverbinder, eine Steckverbindung sowie ein Herstellungsverfahren für eine Steckverbindung zur optischen und elektrischen Signalübertragung bereitzustellen, welche eine hohe Datenübertragung ermöglichen, und robust gegen Umwelteinflüsse sowie kompatibel mit zumindest einem bestehenden Steckverbindungssystem sind.

Die oben genannte Aufgabe wird durch einen Steckverbinder nach Anspruch 1, eine Steckverbindung nach Anspruch 5 sowie einem Herstellungsverfahren nach Anspruch 9 gelöst. Weitere vorteilhafte Ausgestaltungsformen der Erfindung lassen sich den Unteransprüchen, der Beschreibung sowie den Zeichnungen entnehmen.

Insbesondere wird die oben genannte Aufgabe gelöst durch einen Steckverbinder zur optischen und elektrischen Signalübertragung, der an einer Leitung befestigbar ist, aufweisend einen Kontaktträger, zumindest zwei Kontaktbefestigungsbereiche, die in dem Kontaktträger ausgebildet sind, und in denen jeweils ein elektrischer Kontakt, der mit der Leitung verbindbar ist, zur elektrischen Signalübertragung anordbar ist, zumindest einen Linsenbefestigungsbereich, der in dem Kontaktträger ausgebildet ist, und in dem ein Linsenelement, das mit der Leitung verbindbar ist, zur optischen Signalübertragung ausgerichtet anordbar ist, und zumindest ein Verriegelungselement, das mit dem Kontaktträger verriegelt werden kann, wobei die Leitung mit Hilfe des Verriegelungselements im verriegelten Zustand an dem Steckverbinder befestigbar ist.

Der Steckverbinder ist eingerichtet neben elektrischen Signalwegen auch zumindest einen optischen Signalweg zu ermöglichen. Durch den optischen Signalweg können bedeutend höhere Datenraten erreicht werden, als über rein elektrische Signalwege. Das Steckgesicht des Steckverbinders ist dabei, in Bezug auf äußere Abmessungen und die Anordnung der elektrischen Verbindungen, bevorzugt mit gängigen Stecksystemen, insbesondere mit dem HSD-Stecksystem, kompatibel bzw. identisch. Der Linsenbefestigungsbereich ist insbesondere dadurch gekennzeichnet, dass Mittel zum Ausrichten und Fixieren des zumindest einen Linsenelements vorhanden sind. Das Linsenelement ist dabei bewusst ein Bauteil, dass vor dem Fügen in den Steckverbinder fest mit dem optischen Leiter verbunden wird, und dann geführt in dem Steckverbinder angeordnet und befestigt werden kann. Die Präzision im optischen Signalweg wird beim Verbinden des optischen Leiters mit dem Linsenelement sichergestellt, und beim Fügen in den Steckverbinder nicht negativ beeinträchtigt. Der Linsenbefestigungsbereich im Steckverbinder stellt wiederum die korrekte Ausrichtung des optischen Signalwegs sicher, so dass ein optisches Signal ohne signifikante Verluste an ein externes Bauteil weitergeleitet werden kann bzw. von diesem empfangen werden kann. Das Verriegelungselement kann als Sekundärverriegelung dienen. Dadurch kann die Qualität einer Steckverbindung zwischen dem Steckverbinder und einer Leitung erhöht bzw. sichergestellt werden. Insbesondere ist die Leitung mit Hilfe des Verriegelungselements im verriegelten Zustand an dem Kontaktträger befestigbar. Das Verriegelungselement umschließt im verriegelten Zustand bevorzugt einen Teilbereich, insbesondere einen in Umfangsrichtung vertieften Teilbereich, des Kontaktträgers und ist dadurch mit dem Kontaktträger verbunden bzw. an ihm befestigt. Das Verrieglungselement steht somit im verriegelten Zustand nicht vom äußeren Umfang des Kontaktträgers ab.

Bevorzugt ist, dass der zumindest eine Linsenbefestigungsbereich zwischen den zumindest zwei Kontaktbefestigungsbereichen angeordnet ist. Diese Anordnung ermöglicht die gleiche Signalrichtung der elektrischen und des zumindest einen optischen Signalwegs. Die Anordnung ist weiterhin platzsparend, und insbesondere kann ein bestehendes Stecksystem, beispielsweise das HSD-Stecksystem, relativ einfach um einen optischen Signalweg ergänzt werden.

Bevorzugt weist der Linsenbefestigungsbereich zumindest einen Anschlag, an dem das Linsenelement ausrichtbar ist, und/oder zumindest eine Linsenführung auf. Diese Ausrichtung- und Fixierungsmittel verhindern ungewollte radiale und/oder axiale Bewegungen des Linsenelements und sichern die korrekte Ausrichtung des Signalwegs. Durch den Anschlag kann das Linsenelement nur bis zu einem vorgesehenen Maß in den Steckverbinder eingeschoben werden.

Das Verriegelungselement umfasst Vorsprünge und/oder Ausnehmungen, die mit den Kontakten und dem zumindest einen Linsenelement in Eingriff bringbar sind. Die Vorsprünge und/oder Ausnehmungen sind relativ einfach in das Verriegelungselement einzubringen, z.B. durch entsprechende Spritzgusstechniken. Das mechanische in Eingriff bringen ist robust gegenüber Bewegungen am Steckverbinder und sichert die Verbindung. Zusätzlich wird eine weitere Fixierung des Linsenelements ermöglicht. Insbesondere wird ein Herausziehen der Leitung aus dem Steckverbinder im verriegelten Zustand des Verriegelungselements verhindert.

Bevorzugt ist der Steckverbinder mit einem HSD-Steckverbinder kompatibel. Insbesondere weist der Steckverbinder ein HSD-Steckgesicht auf. Ein HSD (High Speed Data) Steckverbinder wird bevorzugt in der Ausstattung von Kraftfahrzeugen, wie PKW, LKW, Bus, etc., verwendet. Somit hat der vorliegenden Steckverbinder ein breites Anwendungsfeld. Insbesondere kann der vorliegende Steckverbinder auch mit einem herkömmlichen HSD-Steckverbinder ohne optischen Signalweg verbunden werden, wobei dann für die Verbindung der optische Signalweg natürlich nicht mehr zur Verfügung steht.

Die oben genannten Probleme werden weiterhin insbesondere gelöst durch eine Steckverbindung zur optischen und elektrischen Signalübertragung, aufweisend eine Leitung, die zumindest zwei elektrische Leiter und zumindest einen optischen Leiter umfasst, wobei an zumindest einem Leitungsende jeder elektrische Leiter mit einem Kontakt verbunden ist und der zumindest eine optische Leiter mit einem Linsenelement verbunden ist, und einen Steckverbinder, wobei jeweils ein Kontakt in einem Kontaktbefestigungsbereich und das zumindest eine Linsenelement in dem zumindest einen Linsenbefestigungsbereich angeordnet ist, und der Steckverbinder mit Hilfe des Verriegelungselements an der Leitung befestigt ist.

Die Steckverbindung ermöglicht die optische Signal- bzw. Datenübertragung, womit sehr hohe Datenraten, wie >1Gb/s, möglich sind. Insbesondere wird eine parallele optische und elektrische Datenübertragung ermöglicht. Somit können bevorzugt in einem Fahrzeug verschiedene Sensoren, Kameras etc. mit Strom versorgt werden und von ihnen Daten erhalten werden bzw. an eine Steuerung (ECU) gesendet werden. Die Datenverbindung ist vorzugsweise asymmetrisch, d.h. in eine Richtung werden signifikant mehr Daten gesendet als in die entgegengesetzte Richtung, so dass ein optischer Leiter vorrangig nur für eine Signalrichtung verwendet wird.

Bevorzugt umfasst das Linsenelement eine Linse, insbesondere eine Kollimatorlinse, und die Linse weist eine asphärische Form und eine Anti-Reflexions-Beschichtung auf. Die Kollimatorlinse wird verwendet, um das bestehende Toleranzfeld von HSD-Steckverbindern nutzen zu können. Insbesondere weitet eine Kollimatorlinse das optische Signal im Steckbereich auf, so dass mit geringer optischer Signaldämpfung eine Lücke im Steckbereich von mehreren Millimetern überwunden werden kann.

Kleine Spaltübergänge von der Linse zu einem externen Bauteil, an das das optische Signal gesendet oder von dem es empfangen werden soll, sind durch den Einsatz der Kollimatorlinse tolerabel. Die asphärische Wölbung sowie die Anti-Reflexions-Beschichtung verbessern die optische Signalweiterleitung. Bevorzugt weist das Linsenelement weiterhin ein Gehäuse auf, das die Linse und einen Teil des optischen Leiters umschließt. Durch den Schutz des Gehäuses ist eine optische Signalweiterleitung von dem optischen Leiter über die Linse an ein weiteres externes Bauteil möglich, ohne das Unterbrechungen im optischen Signalweg auftreten. Unterbrechungen können zum Beispiel Fremdpartikel im optischen Signalweg und/oder ein Spalt zwischen optischen Leiter und Linse sein.

Bevorzugt weist das Linsenelement an seinem Umfang Rippen auf. Die Rippen bilden einen mechanischen Anschlag an der Stirnseite des Steckgesichts. Weiterhin dienen sie der Minimierung der axialen Winkelfehlstellung (Tilt) der Linse bzw. des Linsenelements. Denn die axiale Winkelfehlstellung (Tilt) ist kritisch für die optische Signaldämpfung. Die Linse bzw. das Linsenelement muss möglichst parallel zur optischen Achse stehen. Eine Fehlstellung von 1 ° führt bereits zu einer optischen Dämpfung von mehreren dB. Zudem nimmt das Modenrauschen im Signal stark zu. Der axiale Versatz kann im Bereich von 1 bis 2 zehntel Millimetern liegen, ohne eine größere optische Dämpfung zu erzeugen. Durch die Minimierung der axialen Winkelfehlstellung kann das gegebene mechanische Toleranzfeld insbesondere von HSD-Steckverbindern auch für eine optische Signalweiterleitung verwendet werden.

Bevorzugt weist der optische Leiter zumindest eine Multimode-Faser auf. Multimode-Fasern mit einem typischen Kerndurchmesser von 50µm bieten hinsichtlich der Bandbreite und Verarbeitung gute Voraussetzungen.

Die oben genannten Probleme werden weiterhin insbesondere gelöst durch ein Verfahren zum Herstellen einer Steckverbindung, wobei das Verfahren die folgenden Schritte aufweist: Bereitstellen einer Leitung, die zumindest zwei elektrische und einen optischen Leiter umfasst, zumindest an einem freien Ende der Leitung, Verbinden der elektrischen Leiter mit Kontakten, und Verbinden des zumindest einen optischen Leiters mit einem Linsenelement, Einführen der Kontakte und des zumindest einen Linsenelements, welche mit der Leitung verbunden sind, in einen Steckverbinder, und Befestigen des Steckverbinders an der Leitung, wobei zumindest ein Verriegelungselement an dem Steckverbinder verriegelt wird.

Das Aufbringen der Kontakte und des Linsenelements kann über Zwischenschritte erfolgen, wobei unterschiedliche zeitliche Abfolgen möglich sind. Im Gegensatz zu einem Koppeln des optischen Leiters an ein optisches Element im Steckverbinder, werden Linsenelement und optischer Leiter vor dem Fügen in den Steckverbinder miteinander verbunden. Auf diesem Weg ist die hohe Präzision beim Koppeln von Linse und optischem Leiter sichergestellt. Beim Fügen des Linsenelements mit verbundenem optischen Leiter in den Steckverbinder und beim Verriegeln im Steckverbinder wird dann die exakte Ausrichtung des optischen Signalwegs sichergestellt.

Im Schritt des Befestigens des Steckverbinders an der Leitung wird das zumindest eine Verriegelungselement an dem Steckverbinder mit den Kontakten und dem zumindest einen Linsenelement in Eingriff gebracht. Das in Eingriff bringen ermöglicht eine formschlüssige Befestigung. Diese Befestigung ist robust, und hält große Kräfte, insbesondere quer ausgeübte Zugkräfte, aus, ohne eine direkte Presskraft o.ä. auf die Leiter oder andere Teile der Leitung auszuüben.

Bevorzugt erfolgt der Schritt des Verbindens des optischen Leiters mit dem Linsenelement durch Verkleben und/oder Umspritzen. Bei diesen Verbindungstechniken wird insbesondere die Linse fest mit der Leitung verbunden, so dass kein Spalt zwischen Linse und optischem Leiter entsteht. Dadurch wird eine sehr hohe Präzision im optischen Signalweg erreicht.

Die folgende Beschreibung von Ausführungsbeispielen erfolgt unter Bezugnahme auf die begleitenden Figuren. Dabei zeigen:
- Fig. 1: eine perspektivische Ansicht einer Ausführungsform eines Steckverbinders;
- Fig. 2: eine Längsschnittansicht der Ausführungsform des Steckverbinders aus Fig. 1 ohne Verriegelungselemente;
- Fig. 3: eine perspektivische Ansicht einer Ausführungsform einer Leitung, bei der an freien Enden der Leiter Kontakte und ein Linsenelement auf die jeweiligen elektrischen bzw. den optischen Leiter befestigt sind;
- Fig. 4: die Darstellung aus Fig. 2 mit der eingeführten Ausführungsform einer Leitung aus Fig. 3;
- Fig. 5: die Darstellung aus Fig. 4 mit in Eingriff gebrachten Ausführungsformen von Verriegelungselementen; und
- Fig. 6: die Darstellung aus Fig. 1 mit der eingebrachten Ausführungsform einer Leitung aus Fig. 3.

Im Folgenden werden Ausführungsbeispiele im Detail mit Bezug auf die Figuren beschrieben.

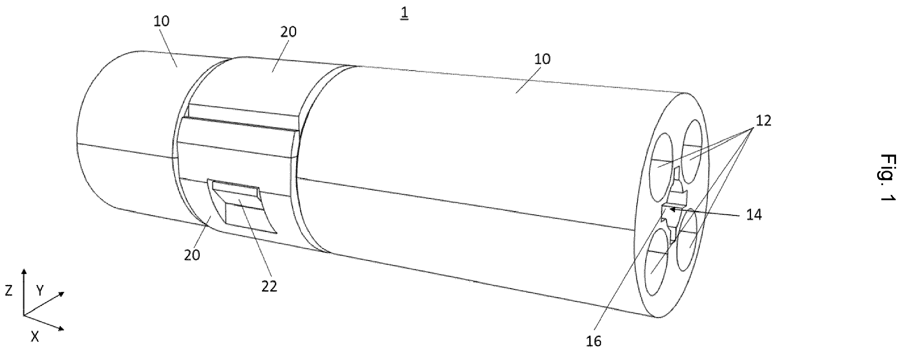

Fig. 1 zeigt ein Ausführungsbeispiel eines Steckverbinders 1. Der Steckverbinder 1 weist einen Kontaktträger 10 und ein Verriegelungselement 20 auf. Der Kontaktträger 10 und das Verriegelungselement 20 sind bevorzugt aus Kunststoff gebildet. Insbesondere sind die äußeren Abmaße des Steckverbinders 1 kompatibel oder identisch mit einem HSD-Steckverbinder.

Das Verriegelungselement 20 ist in der dargestellten Ausführungsform aus zwei Komponenten zusammengesetzt. In alternativen Ausführungsbeispielen kann das Verriegelungselement 20 aus einem oder mehreren Komponenten aufgebaut sein. Das Verriegelungselement 20 kann manuell oder in einem automatisierten Prozess an dem Kontaktträger 10 befestigt und verriegelt werden. Zum Verriegeln weist das Verriegelungselement 20 zumindest ein Verriegelungsmittel 22 auf. Das Verriegelungsmittel 22 ist in der dargestellten Ausführungsform als Rastverbindung ausgebildet. Eine Rastverbindung ermöglicht eine dauerhafte Verbindung, die mit Hilfe eines Werkzeugs auch wieder gelöst werden kann. So kann der Steckverbinder 1 nach seiner Lebenszeit wieder demontiert werden, um bestimmte Vorgaben, z.B. Umweltschutzvorgaben, zu erfüllen. Andere Verriegelungsformen sind möglich.

Der Kontaktträger 10 weist in dem darstellten Ausführungsbeispiel vier Kontakteinführöffnungen 12 auf, über die insgesamt vier Kontakte 36, die an elektrischen Leitern 32 einer Leitung 30 befestigt sind, in den Kontaktträger 10 bzw. den Steckverbinder 1 eingeführt werden können. Zwischen den vier Kontakteinführöffnungen 12 ist eine Linseneinführöffnung 14 angeordnet, über die ein Linsenelement 37, das an einem optischen Leiter 34 der Leitung 30 befestigt ist, in den Kontaktträger 10 bzw. den Steckverbinder 1 eingeführt werden kann. Die Linseneinführöffnung 14 ist bevorzugt symmetrisch zwischen den Kontakteinführöffnungen 12 angeordnet. Von der Mitte der Linseneinführöffnung 14 ausgehend weist die Linseneinführöffnung 14 radial abstehende Vertiefungen auf, welche Linsenführungen 16 bilden. Die Anzahl und Anordnung der Linsenführungen 16 ermöglicht eine Ausrichtung des Linsenelements 37 in dem Steckverbinder 1. Darüber hinaus wäre eine Kodierung zwischen Linsenelement 37 und Steckverbinder 1 möglich.

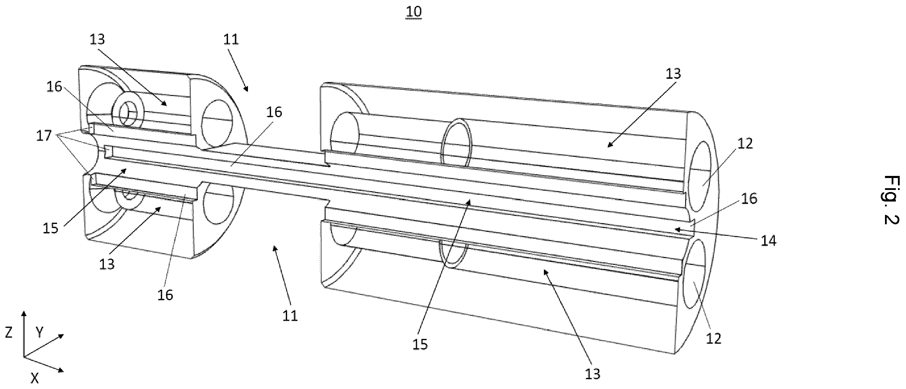

Fig. 2 zeigt eine Längsschnittansicht durch den Kontaktträger 10 ohne Verriegelungselemente 20. Wie in Fig. 2 dargestellt, führen die Kontakteinführöffnungen 12 zu entsprechenden Kontaktbefestigungsbereichen 13 im Inneren des Kontaktträgers 10. In den Kontaktbefestigungsbereichen 13 können elektrische Kontakte 36 angeordnet werden. Die Kontaktbefestigungsbereiche 13 sind so ausgebildet, dass jeweils ein kompletter Kontakt 36 sowie ein anschließender Teil eines Leiters 32 in dem Kontaktträger 10 aufgenommen werden. Dadurch sind die Kontakte 36 und die Übergänge zwischen den Leitern 32 und den Kontakten 36 vor schädlichen Umwelteinflüssen geschützt. Für eine kompakte Anordnung sind in dem dargestellten Ausführungsbeispiel jeweils zwei Leiterpaare neben- bzw. übereinander angeordnet.

Zwischen den Kontaktbefestigungsbereichen 13 ist ein Linsenbefestigungsbereich 15 ausgebildet. Der Linsenbefestigungsbereich 15 ist eingerichtet einen optischen Leiter 34, an dem ein Linsenelement 37 befestigt ist, aufzunehmen, wobei der optische Leiter 34 mit dem Linsenelement 37 in dem Kontaktträger 10 ausgerichtet ist. Die Ausrichtung des Linsenelementes 37 erfolgt in dem dargestellten Ausführungsbeispiel durch vier symmetrisch angeordnete Linsenführungen 16, die in Form von Führungsbahnen, insbesondere entlang des kompletten Linsenbefestigungsbereichs 15, ausgebildet sind, und einem Anschlag 17 in jeder Linsenführung 16.

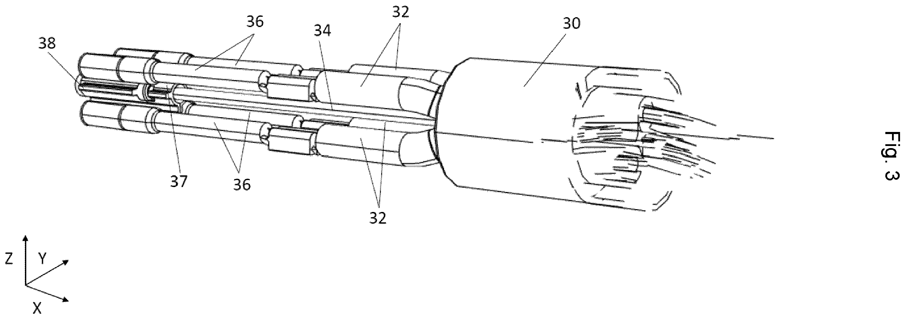

Fig. 3 zeigt ein Ausführungsbeispiel einer Leitung 30 mit vier elektrischen Leitern 32 und einem optischen Leiter 34. Bevorzugt ist die Leitung 30 eine geschirmte Vier-Ader-leitung, die um einen optischen Leiter 34 erweitert wurde. In einer alternativen Ausführungsform kann die Leitung 30 eine Zweidrahtleitung sein, die um einen optischen Leiter 34 erweitert wurde. Die vier elektrischen Leiter 32 wurden an ihren Enden abisoliert, so dass eine direkte elektrische Verbindung zwischen den Leitern 32 und den (Innenleiter-) Kontakten 36, bevorzugt über eine Crimpverbindung, hergestellt ist. Die Befestigung der elektrischen Kontakte 36 an den Leitern 32 kann vor, nach oder parallel zur Befestigung des Linsenelements 37 an dem optischen Leiter 34 erfolgen. Die vier Kontakte 36 sind vor dem Fügen in einen Steckverbinder 1 bevorzugt parallel zueinander ausgerichtet.

Der optische Leiter 34 ist in dem dargestellten Ausführungsbeispiel in der Leitung 30 mittig angeordnet. In anderen Ausführungsbeispielen kann der optische Leiter 34 auch an anderer Position in der Leitung 30 angeordnet sein. Bevorzugt verläuft der optische Leiter 34, insbesondere an seinem freien Ende, parallel zu den elektrischen Leitern 32, um die gleiche Signalrichtung aufzuweisen. Der optische Leiter 34 ist an seinem freien Ende mit einem Linsenelement 37 fest verbunden.

Das Linsenelement 37 weist zumindest eine Linse 39 und ein Gehäuse auf. Das Gehäuse mit der Linse 39 kann als separates Bauteil mit dem optischen Leiter, z.B. durch Kleben, verbunden werden oder das Gehäuse wird mittels Umspritzen der Linse 39 und des optischen Leiters 34 erzeugt. Das Linsenelement 37 ist durch das Kleben und/oder Umspritzen dauerhaft und nicht verschiebbar mit dem optischen Leiter 34 verbunden. Weiterhin wird durch die genannten Verbindungstechniken verhindert, dass Fremdpartikel dort in den optischen Signalweg eindringen und/oder dass Unterbrechungen im optischen Signalweg, z.B. aufgrund von Spaltbildung zwischen der Linse 39 und dem optischen Leiter 34, auftreten.

Für eine möglichst verlustfreie optische Signalweiterleitung wurde die Linse 39 genau angepasst. Die Linse 39 ist aus Glas oder PMMA oder beispielsweise Polyetherimide PEI, Polycarbonat PC, oder einem Kunststoff mit geeigneten optischen Eigenschaften gebildet. Die Linse 39 ist insbesondere eine Kollimatorlinse mit einer asphärischen Wölbung an ihrer dem optischen Leiter 34 abgewandten Seite. Weiterhin weist die Wölbung bevorzugt eine Anti-Reflexions-Beschichtung auf. In einem Ausführungsbeispiel liegt der aktive Durchmesser der Linse 39 im Bereich von 0,5mm bis 1,5mm, bevorzugt 0,8mm bis 1,2mm. Die Länge der Linse 39 (vom optischen Leiter 34 bis zum Linsenzentrum) bestimmt sich aus der numerischen Apertur (NA) der verwendeten Faser, dem maximalen Strahlaufweitungsdurchmesser und dem verwendeten Linsenmaterial. In einem Ausführungsbeispiel liegt die Länge der Linse 39 im Bereich von 2 bis 4mm, bevorzugt im Bereich von 2,8 bis 3,8mm.

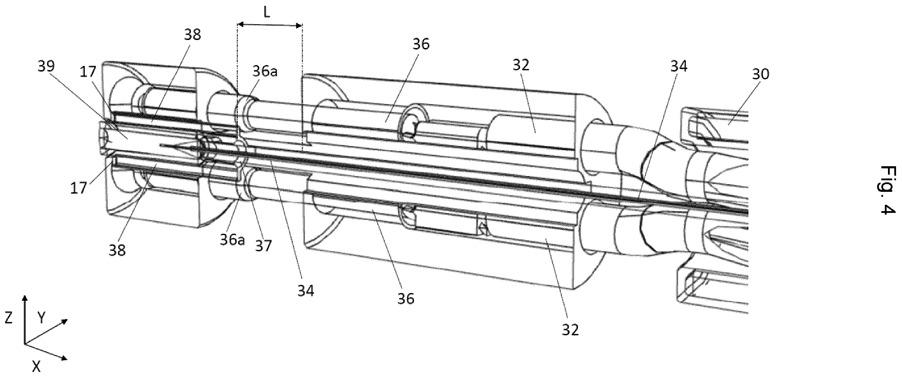

Fig. 4 zeigt einen Teilschritt beim Herstellen einer Steckverbindung 100. Die Leitung 30, die mit Kontakten 36 und einem Linsenelement 37 versehen wurde, wurde über die Kontakteinführöffnungen 12 und die Linseneinführöffnung 14 in den Kontaktträger 10 ohne Verriegelungselemente 20 eingeführt. In der dargestellten Montageendposition, in der zumindest der optische Leiter 34 mit dem Linsenelement 37 in dem Steckverbinder 1 verriegelt werden kann, liegt das Linsenelement 37 in den Linsenführungen 16 an den Anschlägen 17 an. In der Montageendposition ergibt sich eine Vertiefung mit einer Länge L zwischen dem Linsenelement 37 und einer Seitenkante des Kontaktträgers 10. Weiterhin können sich Vertiefungen zwischen Vorsprüngen 36a an den Kontakten 36 und Seitenkanten des Kontaktträgers 10 ergeben.

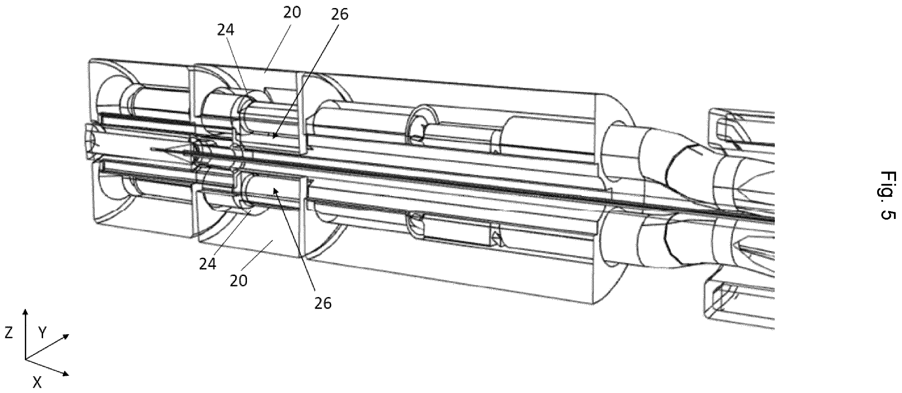

Fig. 5 zeigt einen darauffolgenden Teilschritt beim Herstellen der Steckverbindung 100. Um den Steckverbinder 1 an der Leitung 30 zu befestigen, werden die Verriegelungselemente 20 an dem Kontaktträger 10 angeordnet und über Verriegelungsmittel 22 miteinander verriegelt. Die Verriegelungsmittel 20 sind in einem Spalt 11 des Kontaktträgers 10 formschlüssig angeordnet. Ein ungewolltes Verschieben oder Lösen der Verriegelungselemente 20 ist nicht möglich. Im verriegelten Zustand greifen Vorsprünge 26, die sich radial nach innen erstrecken, an den Verriegelungselementen 20 in die zumindest eine Vertiefung mit der Länge L zwischen dem Linsenelement 37 und einer Seitenkante des Kontaktträgers 10 ein. Neben den Linsenführungen 16, die das Linsenelement 37 an einer ungewollten radialen Bewegung hindern, verhindern die Anschläge 17 auf einer Seite und der zumindest eine Vorsprung 26 der Verriegelungselemente 20 auf der anderen Seite eine ungewollte axiale Bewegung des Linsenelements 37. Weiterhin greifen in dem dargestellten Ausführungsbeispiel entsprechend angepasste Ausnehmungen 24 und Vorsprünge an den Verriegelungselementen 20 zwischen die Vorsprünge 36a an den Kontakten 36 und den Seitenwänden des Kontaktträgers 10 ein und verhindern dadurch ein ungewolltes Verschieben der Kontakte 36. Da die Kontakte 36 und auch das Linsenelement 37 fest mit den entsprechenden Leitern 32, 34 der Leitung 30 verbunden sind, wird über das Fixieren der Kontakte 36 und des Linsenelementes 37 in dem Kontaktträger 10 bzw. dem Steckerverbinder 1 auch die Leitung 30 an dem Steckverbinder 1 befestigt.

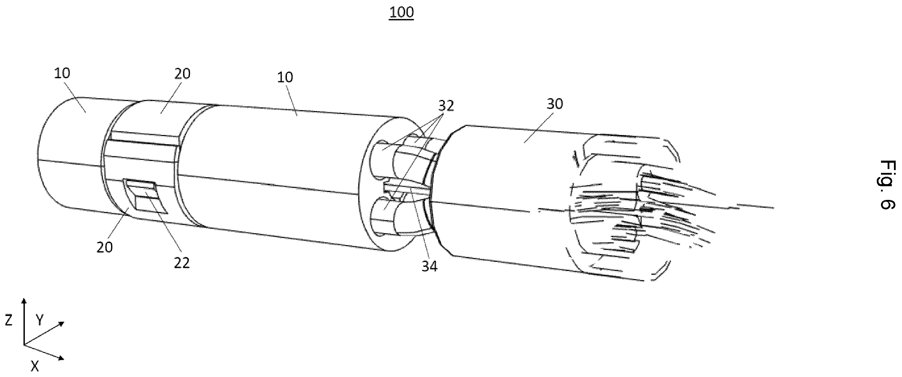

Fig. 6 zeigt eine Ausführungsform einer hergestellten Steckverbindung 100. Die Steckverbindung 100 ermöglicht über den optischen Signalweg eine bedeutend höhere Datenrate, als sie über eine rein elektrische Steckverbindung möglich ist. Aufgrund ihrer Abmaße und der Positionierung der elektrischen Kontakte 36 kann die dargestellte Steckverbindung 100 jedoch auch an eine rein elektrische Steckverbindung, insbesondere eine HSD-Steckverbindung, angeschlossen werden. In diesem Fall wird der optische Signalweg nicht verwendet, aber die elektrischen Signalwege funktionieren. Über der Steckverbindung 100 kann ein Gehäuse angeordnet werden.

### BEZUGSZEICHENLISTE

- 1: Steckverbinder
- 10: Kontaktträger
- 11: Spalt
- 12: Kontakteinführöffnung
- 13: Kontaktbefestigungsbereich
- 14: Linseneinführöffnung
- 15: Linsenbefestigungsbereich
- 16: Linsenführung
- 17: Anschlag
- 20: Verriegelungselement
- 22: Verriegelungsmittel
- 24: Ausnehmung
- 26: Vorsprung
- 30: Leitung
- 32: elektrischer Leiter
- 34: optischer Leiter
- 36: Kontakt
- 37: Linsenelement
- 38: Rippe
- 39: Linse
- L: Länge
- X: Längsrichtung
- Y: erste Querrichtung
- Z: zweite Querrichtung

## Patentansprüche

1. Steckverbinder (1) zur optischen und elektrischen Signalübertragung, der an einer Leitung (30) befestigbar ist, aufweisend:
a) einen Kontaktträger (10);
b) zumindest zwei Kontaktbefestigungsbereiche (13), die in dem Kontaktträger (10) ausgebildet sind, und in denen jeweils ein elektrischer Kontakt (36), der mit der Leitung (30) verbindbar ist, zur elektrischen Signalübertragung anordbar ist;
c) zumindest einen Linsenbefestigungsbereich (15), der in dem Kontaktträger (10) ausgebildet ist, und in dem ein Linsenelement (37), das mit der Leitung (30) verbindbar ist, zur optischen Signalübertragung ausgerichtet anordbar ist; und
d) zumindest ein Verriegelungselement (20), das mit dem Kontaktträger (10) verriegelt werden kann, wobei die Leitung (30) mit Hilfe des Verriegelungselements (20) im verriegelten Zustand an dem Steckverbinder (1) befestigbar ist, wobei
e) das Verriegelungselement (20) Vorsprünge (26) und/oder Ausnehmungen (24) umfasst, die mit den Kontakten (36) und dem zumindest einen Linsenelement (37) in Eingriff bringbar sind.

2. Steckverbinder (1) nach Anspruch 1, bei dem der zumindest eine Linsenbefestigungsbereich (15) zwischen den zumindest zwei Kontaktbefestigungsbereichen (13) angeordnet ist.

3. Steckverbinder (1) nach Anspruch 1 oder 2, bei dem der Linsenbefestigungsbereich (15) zumindest einen Anschlag (17), an dem das Linsenelement (37) ausrichtbar ist, und/oder zumindest eine Linsenführung (16) aufweist.

4. Steckverbinder (1) nach einem der Ansprüche 1 - 3, bei dem der Steckverbinder (1) mit einem HSD-Steckverbinder kompatibel ist.

5. Steckverbindung (100) zur optischen und elektrischen Signalübertragung, aufweisend:
a) eine Leitung (30), die zumindest zwei elektrische Leiter (32) und zumindest einen optischen Leiter (34) umfasst, wobei an zumindest einem Leitungsende jeder elektrische Leiter (32) mit einem Kontakt (36) verbunden ist und der zumindest eine optische Leiter (34) mit einem Linsenelement (37) verbunden ist, und
b) einen Steckverbinder (1) nach einem der Ansprüche 1 - 4, wobei jeweils ein Kontakt (36) in einem Kontaktbefestigungsbereich (13) und das zumindest eine Linsenelement (37) in dem zumindest einen Linsenbefestigungsbereich (15) angeordnet ist, und der Steckverbinder (1) mit Hilfe des Verriegelungselements (20) an der Leitung (30) befestigt ist.

6. Steckverbindung (100) nach Anspruch 5, bei dem das Linsenelement (37) eine Linse (39), insbesondere eine Kollimatorlinse, umfasst, und die Linse (39) eine asphärische Form und eine Anti-Reflexions-Beschichtung aufweist.

7. Steckverbindung (100) nach Anspruch 5 oder 6, bei dem das Linsenelement (37) an seinem Umfang Rippen (38) aufweist.

8. Steckverbindung (100) nach einem der Ansprüche 5 - 7, bei dem der optische Leiter (34) zumindest eine Multimode-Faser aufweist.

9. Verfahren zum Herstellen einer Steckverbindung (100), insbesondere einer Steckverbindung (100) nach einem der Ansprüche 5 - 8, wobei das Verfahren die folgenden Schritte aufweist:
a) Bereitstellen einer Leitung (30), die zumindest zwei elektrische und einen optischen Leiter (32, 34) umfasst;
b) zumindest an einem freien Ende der Leitung (30), Verbinden der elektrischen Leiter (32) mit Kontakten (36); und
c) Verbinden des zumindest einen optischen Leiters (34) mit einem Linsenelement (37);
d) Einführen der Kontakte (36) und des zumindest einen Linsenelements (37), welche mit der Leitung (30) verbunden sind, in einen Steckverbinder (1); und
e) Befestigen des Steckverbinders (1) an der Leitung (30), wobei zumindest ein Verriegelungselement (20) an dem Steckverbinder (1) verriegelt wird; und wobei
f) das zumindest eine Verriegelungselement (20) an dem Steckverbinder (1) mit den Kontakten (36) und dem zumindest einen Linsenelement (37) in Eingriff gebracht wird.

10. Verfahren nach Anspruch 9, bei dem der Schritt des Verbindens des optischen Leiters (34) mit dem Linsenelement (37) durch Verkleben und/oder Umspritzen erfolgt.

## Claims

1. Plug connector (1) for optical and electrical signal transmission, which plug connector can be fastened to a line (30), having:
a) a contact support (10);
b) at least two contact fastening regions (13) which are formed in the contact support (10) and in each of which an electrical contact (36), which can be connected to the line (30), can be arranged for electrical signal transmission;
c) at least one lens fastening region (15) which is formed in the contact support (10) and in which a lens element (37), which can be connected to the line (30), can be arranged in an aligned manner for optical signal transmission; and
d) at least one locking element (20) which can be locked to the contact support (10), wherein the line (30) can be fastened to the plug connector (1) using the locking element (20) in the locked state, wherein
e) the locking element (20) comprises projections (26) and/or recesses (24) which can be brought into engagement with the contacts (36) and the at least one lens element (37).

2. Plug connector (1) according to Claim 1, in which the at least one lens fastening region (15) is arranged between the at least two contact fastening regions (13).

3. Plug connector (1) according to Claim 1 or 2, in which the lens fastening region (15) has at least one stop (17) on which the lens element (37) can be aligned and/or has at least one lens guide (16).

4. Plug connector (1) according to any one of Claims 1-3, in which the plug connector (1) is compatible with an HSD plug connector.

5. Plug connection (100) for optical and electrical signal transmission, having:
a) a line (30) comprising at least two electrical conductors (32) and at least one optical conductor (34), wherein each electrical conductor (32) is connected to a contact (36) at at least one line end and the at least one optical conductor (34) is connected to a lens element (37); and
b) a plug connector (1) according to any one of Claims 1-4, wherein in each case one contact (36) is arranged in a contact fastening region (13) and the at least one lens element (37) is arranged in the at least one lens fastening region (15), and the plug connector (1) is fastened to the line (30) using the locking element (20).

6. Plug connection (100) according to Claim 5, in which the lens element (37) comprises a lens (39), in particular a collimator lens, and the lens (39) has an aspherical shape and an anti-reflection coating.

7. Plug connection (100) according to Claim 5 or 6, in which the lens element (37) has ribs (38) on its circumference.

8. Plug connection (100) according to any one of Claims 5-7, in which the optical conductor (34) has at least one multi-mode fibre.

9. Method for producing a plug connection (100), in particular a plug connection (100) according to any one of Claims 5-8, wherein the method comprises the following steps:
a) providing a line (30) comprising at least two electrical and one optical conductor (32, 34);
b) connecting the electrical conductors (32) to contacts (36) at least at one free end of the line (30); and
c) connecting the at least one optical conductor (34) to a lens element (37);
d) introducing the contacts (36) and the at least one lens element (37), which are connected to the line (30), into a plug connector (1); and
e) fastening the plug connector (1) to the line (30), wherein at least one locking element (20) is locked to the plug connector (1); and wherein
f) the at least one locking element (20) on the plug connector (1) is brought into engagement with the contacts (36) and the at least one lens element (37).

10. Method according to Claim 9, in which the step of connecting the optical conductor (34) to the lens element (37) is carried out by adhesive bonding and/or overmoulding.

## Revendications

1. Connecteur enfichable (1) pour la transmission de signaux optiques et électriques, qui peut être fixé sur une ligne (30), comportant :
a) un support de contact (10) ;
b) au moins deux zones de fixation de contact (13), qui sont formées dans le support de contact (10) et dans lesquelles respectivement un contact (36) électrique pouvant être connecté à la ligne (30) peut être disposé pour la transmission de signaux électriques ;
c) au moins une zone de fixation de lentille (15), qui est formée dans le support de contact (10) et dans laquelle un élément de lentille (37) pouvant être connecté à la ligne (30) peut être disposé de manière orientée pour la transmission de signaux optiques ; et
d) au moins un élément de verrouillage (20), qui peut être verrouillé avec le support de contact (10), la ligne (30) pouvant être fixée sur le connecteur enfichable (1) à l'aide de l'élément de verrouillage (20) dans l'état verrouillé,
e) l'élément de verrouillage (20) comprenant des parties faisant saillie (26) et/ou des évidements (24) qui peuvent être amenés en prise avec les contacts (36) et l'au moins un élément de lentille (37).

2. Connecteur enfichable (1) selon la revendication 1, l'au moins une zone de fixation de lentille (15) étant disposée entre les au moins deux zones de fixation de contact (13).

3. Connecteur enfichable (1) selon la revendication 1 ou 2, la zone de fixation de lentille (15) comportant au moins une butée (17), sur laquelle l'élément de lentille (37) peut être orienté, et/ou au moins un guide de lentille (16).

4. Connecteur enfichable (1) selon l'une des revendications 1 à 3, le connecteur enfichable (1) étant compatible avec un connecteur enfichable HSD.

5. Connexion enfichable (100) pour la transmission de signaux optiques et électriques, comportant :
a) une ligne (30), qui comprend au moins deux conducteurs électriques (32) et au moins un conducteur optique (34), chaque conducteur électrique (32) étant connecté à un contact (36) et l'au moins un conducteur optique (34) étant connecté à un élément de lentille (37) sur au moins une extrémité de conduite ; et
b) un connecteur enfichable (1) selon l'une des revendications 1 à 4, respectivement un contact (36) étant disposé dans une zone de fixation de contact (13) et l'au moins un élément de lentille (37) étant disposé dans l'au moins une zone de fixation de lentille (15), et le connecteur enfichable (1) étant fixé sur la ligne (30) à l'aide de l'élément de verrouillage (20).

6. Connexion enfichable (100) selon la revendication 5, l'élément de lentille (37) comprenant une lentille (39), en particulier une lentille de collimation, et la lentille (39) présentant une forme asphérique et un revêtement antireflet.

7. Connexion enfichable (100) selon la revendication 5 ou 6, l'élément de lentille (37) comportant des nervures (38) sur sa périphérie.

8. Connexion enfichable (100) selon l'une des revendications 5 à 7, le conducteur optique (34) comportant au moins une fibre multimode.

9. Procédé d'établissement d'une connexion enfichable (100), en particulier d'une connexion enfichable (100) selon l'une des revendications 5 à 8, le procédé comportant les étapes suivantes :
a) fourniture d'une ligne (30), qui comprend au moins deux conducteurs électriques et un conducteur optique (32, 34) ;
b) au moins sur une extrémité libre de la ligne (30), connexion des conducteurs électriques (32) à des contacts (36) ; et
c) connexion de l'au moins un conducteur optique (34) à un élément formant lentille (37) ;
d) introduction des contacts (36) et de l'au moins un élément de lentille (37), qui sont connectés à la ligne (30), dans un connecteur enfichable (1) ; et
e) fixation du connecteur enfichable (1) sur la ligne (30), au moins un élément de verrouillage (20) étant verrouillé sur le connecteur enfichable (1) ; et
f) l'au moins un élément de verrouillage (20) sur le connecteur enfichable (1) étant amené en prise avec les contacts (36) et l'au moins un élément de lentille (37).

10. Procédé selon la revendication 9, l'étape de connexion du conducteur optique (34) à l'élément de lentille (37) étant effectuée par collage et/ou surmoulage.
